# EUROPÄISCHE PATENTSCHRIFT

(11) **EP 1 090 516 B1**
(45) Veröffentlichungstag und Bekanntmachung des Hinweises auf die Patenterteilung: **02.10.2002**
(21) Anmeldenummer: 99939331.7
(22) Anmeldetag: 15.06.1999
(51) Int. Cl.: H04Q 7/36

(54) **VERFAHREN ZUR STEUERUNG EINER FUNKZELLENGRÖSSE UND BASISSTATION**
METHOD FOR CONTROLLING THE MAGNITUDE OF A RADIO CELL AND BASE STATION
PROCEDE DE REGULATION DE LA GRANDEUR D'UNE CELLULE RADIO, ET STATION DE BASE

(30) Priorität: 23.06.1998 DE 19827912
(43) Veröffentlichungstag der Anmeldung: 11.04.2001
(73) Patentinhaber: SIEMENS AKTIENGESELLSCHAFT, 80333 München (DE)
(72) Erfinder: BENZ, Michael, D-13629 Berlin (DE); KLEIN, Anja, D-10709 Berlin (DE); SITTE, Armin, D-10405 Berlin (DE); ULRICH, Thomas, D-67098 Bad Dürkheim (DE); KOTTKAMP, Meik, D-81369 München (DE)
(86) Internationale Anmeldenummer: DE9901750
(87) Internationale Veröffentlichungsnummer: WO99067963

(56) Entgegenhaltungen:
- WO-A-97/08909
- WO-A-98/10615
- MIYA K ET AL: "CDMA/TDD CELLULAR SYSTEMS FOR THE 3RD GENERATION MOBILE COMMUNICATION" IEEE VEHICULAR TECHNOLOGY CONFERENCE,US,NEW YORK, IEEE, Bd. CONF. 47, Seite 820-824 XP000736722 ISBN: 0-7803-3660-7

## Beschreibung

Die Erfindung betrifft ein Verfahren zur Steuerung einer Funkzellengröße und eine Basisstation eines Funk-Kommunikationssystems, insbesondere eines Mobilfunksystems.

In Funk-Kommunikationssystemen werden Informationen (beispielsweise Sprache, Bildinformationen, Internet-Nachrichten oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TDMA/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

In Funk-Kommunikationssystemen dienen in Organisationskanälen, wie beispielsweise dem aus dem GSM-Mobilfunksystem (Global System for Mobile Communications) bekannten Organisationskanal BCCH (Broadcast Control Channel), übertragenen Organisationsinformationen dazu, daß Mobilstationen in einer von einer Basisstation mit funktechnischen Ressourcen versorgten Funkzelle mit den für die Funkzelle relevanten Daten versorgt werden. Organisationsinformationen sind dabei Angaben über die Funkzelle, deren Kanalstruktur und in der Funkzelle verfügbare Dienste und Optionen. Die Organisationsinformationen dienen somit der Mobilstation zur Synchronisation und Auswahl der Funkzelle.

Aus dem GSM-Mobilfunksystem und für zukünftige Mobilfunksysteme aus DE 198 10 285 ist es bekannt, pro Rahmen in Abwärtsrichtung einen Zeitschlitz zur Übertragung von Organisationsinformationen vorzusehen. Dazu wird üblicherweise der erste Zeitschlitz des Rahmens herangezogen. Damit liegen feste Abstände zwischen den Aussendungen der Organisationsinformationen vor, die derart geplant sind, daß auch in ungünstigen Verkehrslaststituationen und bei maximal erlaubter Geschwindigkeit der Mobilstationen eine ordnungsgemäße Auswertung der Organisationsinformationen und eine Übergabe der Mobilstationen für alle Dienste zwischen verschiedenen Funkzellen unterstützt wird.

Die Organisationsinformationen werden nach dem Stand der Technik gemäß dem GSM-Mobilfunksystem mit Ausnahme von hierarchischen Zellstrukturen immer mit der höchsten Sendeleistung gesendet. Die Empfangbarkeit der gesendeten Organisationsinformationen ist für die Mobilstation das einzig verfügbare Kriterium für die Entscheidung, ob ein Einbuchen in der Funkzelle möglich ist. Ist ein Einbuchen, d.h. der Aufbau einer Verbindung möglich, so können die verfügbaren Dienste angefordert werden. Beim GSM-Mobilfunksystem sind dies Sprach- bzw. Kurznachrichtendienste.

Soll jedoch die Angebotspalette an Diensten erweitert werden, so ist auch für den anspruchsvollsten Dienst sicherzustellen, daß dieser bei ausreichender Empfangbarkeit der Organisationsinformationen ebenfalls gut empfangbar ist. Dabei ist zu berücksichtigen, daß jeder Dienst abhängig von der Komplexität eine bestimmte Reichweite besitzt, wodurch der Fall auftreten kann, daß nicht alle Dienste flächendeckend in der Funkzelle von der Mobilstation nutzbar sind, wenn die Reichweite einiger Dienste kleiner als die Zellgrenzen der Funkzelle ist.

Aus der WO 97 08909 A ist ein Verfahren bekannt, bei dem die Größe einer Funkzelle in Abhängigkeit von Lastbedingungen in der Funkzelle angepaßt wird.

Der Erfindung liegt die Aufgabe zugrunde, ein Verfahren und eine Basisstation anzugeben, die eine gute Empfangbarkeit von Diensten eines Funk-Kommunikationssystems sicherstellen. Diese Aufgabe wird durch das Verfahren mit den Merkmalen des Anspruchs 1 und durch die Basisstation mit den Merkmalen des Anspruchs 13 gelöst. Vorteilhafte Weiterbildungen sind den Unteransprüchen zu entnehmen.

Erfindungsgemäß werden in einem Funk-Kommunikationssystem, wobei ein Radius einer von jeweils einer Basisstation des Funk-Kommunikationssystems mit funktechnischen Ressourcen versorgten Funkzelle durch eine Sendeleistung eines Organisationskanals definiert ist, von dem Funk-Kommunikationssystem ein oder mehrere individuelle Dienste zur Verfügung gestellt, die jeweils eine unterschiedliche Reichweite aufweisen. Abhängig von der Reichweite eines oder mehrerer Dienste wird die Sendeleistung des Organisationskanals gesteuert.

Diese erfindungsgemäßen Merkmale ermöglichen vorteilhaft, daß der Radius der Funkzelle nicht nur allein durch topographische und morphologische Bedingungen des Versorgungsgebietes, sondern auch abhängig von der Reichweite bestimmter Dienste definiert wird. Hierdurch wird sichergestellt, daß alle Dienste, die für die Definition der Größe der Funkzelle herangezogen wurden, flächendeckend innerhalb der Funkzelle zur Verfügung stehen und somit von einer Mobilstation, die sich in der Funkzelle befindet, genutzt werden können. Dabei ist es beispielsweise vorteilhaft möglich, die Sendeleistung für den Organisationskanal zu verringern, um die Funkzellengrenzen der Reichweite bestimmter Dienste, die in der gesamten Funkzelle verfügbar sein sollen, anzupassen.

Gemäß einer ersten Weiterbildung der Erfindung werden in dem Organisationskanal Informationen über die Sendeleistung und/oder eine Schutzkodierung des Organisationskanals von der Basisstation gesendet.

Hierdurch wird vorteilhaft ermöglicht, daß eine Mobilstation, die sich beispielsweise außerhalb der Funkzelle befindet und beispielsweise nur auf einfache Dienste, die nur geringe Anforderungen an das physikalische Übertragungsmedium stellen, zugreifen möchte, durch die Informationen auf dem Organisationskanal die effektive Sendeleistung, mit der der Organisationskanal gesendet wird, und daraus die Sendeleistung, mit der die einfachen Dienste gesendet werden ermitteln und diese auch außerhalb der Funkzelle nutzen kann. Dieses ist besonders vorteilhaft, wenn in einer Funkzelle lokal ein sehr hohes Verkehrsaufkommen, ein sogenannter Hot-Spot, auftritt, da eine Mobilstation, die sich innerhalb oder nahe des Gebietes des hohen Verkehrsaufkommen befindet, beispielsweise eine Verbindung zu einer benachbarte Basisstation aufbauen kann, wenn sie nur Dienste mit geringen Anforderungen bzw. einer geringen Komplexität nutzen möchte.

Gemäß zweier alternativer und auf die erste Weiterbildung bezogene Weiterbildungen der Erfindung werden zum einem die in dem Organisationskanal gesendeten Informationen auf für das Funk-Kommunikationssystem geltenden einheitlichen Referenzwerten bezogen angegeben, und zum anderen werden die Informationen auf für eine jeweilige Hierarchieebene geltenden einheitlichen Referenzwerten bezogen angegeben, wenn das Funk-Kommunikationssystem gemäß einer hierarchischen Funkzellenstruktur aufgebaut ist.

Diese beiden Ausgestaltungen besitzen den Vorteil, daß eine empfangende Mobilstation eine Berechnung der Sendeleistung des Organisationskanals durchführen kann, wenn ihr a priori bekannt ist, mit welcher maximalen Leistung der Organisationskanal gesendet werden kann. Diese maximale Sendeleistung ist beispielsweise für alle Basisstationen des Funk-Kommunikationssystems einheitlich, wenn eine einheitliche Funkzellenstruktur besteht, bzw. abhängig von der Funkzellenebene in einer hierarchischen Funkzellenstruktur. In einer derartigen hierarchischen Funkzellenstruktur kann als zusätzliche Information beispielsweise die jeweilige Hierarchieebene angegeben werden. Als Information kann beispielsweise die relative Dämpfung der Sendeleistung des Organisationskanal in dB oder aber der absolute Wert der Sendeleistung angegeben werden.

Die empfangende Mobilstation kann hierdurch Voraussagen über die Reichweite von Diensten, die nur geringe Anforderungen an das Übertragungsmedium stellen, treffen und gegebenenfalls trotz eines im Vergleich zu einer benachbarten Basisstation nur mit einer geringen Sendeleistung gesendeten Organisationskanals eine Verbindung zu dieser Basisstation aufbauen und einen derartigen einfachen Dienst nutzen.

Einer weiteren Weiterbildung der Erfindung zufolge werden ein oder mehrere Dienste mit einer höheren Sendeleistung als der Organisationskanal gesendet. Dieses besitzt den Vorteil, daß ein Kompromiß zwischen der Zurücknahme der Sendeleistung des Organisationskanals und der Reichweite bestimmter Dienste geschlossen werden kann, um ein ausreichend großes Gebiet durch die Basisstation mit funktechnischen Ressourcen zu versorgen.

Gemäß einer weiteren Ausgestaltung der Erfindung wird die Sendeleistung des Organisationskanals derart gesteuert, daß der Radius der Funkzelle einer Reichweite zumindest eines Dienstes entspricht, der innerhalb der Funkzelle genutzt werden soll. Hierdurch wird vorteilhaft sichergestellt, daß eine vollständige Versorgung der Funkzelle durch den Dienst sichergestellt ist.

Vorteilhaft wirkt ebenfalls eine weitere Weiterbildung der Erfindung, gemäß der die Sendeleistung des Organisationskanals und/oder eines oder mehrerer Dienste abhängig von einer Verkehrsbelastung in der Funkzelle einer benachbarten Basisstation gesteuert wird. Durch diese Ausgestaltung kann vorteilhaft eine dynamische Verschiebung der Funkzellengrenzen der jeweiligen Basisstationen vorgenommen werden, beispielsweise durch eine Operations- und Wartungszentrum oder durch eine Einrichtung zur Zuteilung funktechnischer Ressourcen gesteuert, wenn in einer Funkzelle eine sehr hohe Verkehrsbelastung auftritt, und somit ein Teil der Verkehrslast von den benachbarten Basisstationen aufgenommen werden.

In drei weiteren vorteilhaften Weiterbildungen der Erfindung wird für die Bestimmung der Reichweite eines Dienstes eine maximale Datenrate der Funkschnittstelle, eine zu garantierende Dienstqualität des Dienstes und/oder eine aktuelle Auslastung der Funkschnittstelle berücksichtigt. Durch diese Parameter kann die Reichweite jedes einzelnen Dienstes jederzeit bestimmt werden und vorteilhaft die Sendeleistung des Organisationskanals den aktuellen Bedingungen angepaßt werden. Diese für die Bestimmung der Reichweite der individuellen Dienste verwendeten Informationen können der Basisstation beispielsweise von einem Operations- und Wartungszentrum des Funk-Kommunikationssystems zur Verfügung gestellt werden, wodurch vorteilhaft eine direkte Steuerung der Funkzellengrenzen in einem großen Versorgungsgebiet des Funk-Kommunikationssystems zentral vorgenommen werden kann.

Gemäß einer weiteren Weiterbildung der Erfindung sind die individuellen Dienste als Sprachdienste, Notrufdienste, Kurznachrichtendienste, Teletextdienste, Faksimiledienste, Internetdienst oder Bildübertragungsdienste ausgebildet. Das erfindungsgemäße Verfahren ermöglicht vorteilhaft für die Gesamtheit dieser individuellen Dienste eine Empfangbarkeit in der gesamten Gebiet der Funkzelle der Basisstation, unabhängig von den physikalischen Anforderungen an das Übertragungsmedium, die beispielsweise bei Internetdiensten oder Bildübertragungsdiensten mit einer hohen Übertragungskapazität weitaus höher als bei einfachen Sprachdiensten mit einer nur beschränkten benötigten Ubertragungskapazität ist.

Vorteilhaft kann das erfindungsgemäße Verfahren gemäß einer weiteren Weiterbildung eingesetzt werden, wenn die Funkschnittstelle nach einem TDD-Ubertragungsverfahren mit breitbandigen Kanälen organisiert ist. Dieses Übertragungsverfahren zeichnet sich dadurch aus, daß sowohl die Abwärts- als auch die Aufwärtsrichtung von bzw. zu der Basisstation zeitlich getrennt in einem Kanal übertragen wird.

Ausführungsbeispiele der Erfindung werden anhand der beiliegenden Zeichnungen näher erläutert.

Dabei zeigen
- FIG 1: ein Blockschaltbild eines Funk-Kommunikationsystems, insbesondere eines Mobilfunksystems,
- FIG 2: eine schematische Darstellung der Rahmenstruktur eines TDD-Übertragungsverfahrens,
- FIG 3: schematische Darstellungen der Reichweiten unterschiedlicher Dienste,
- FIG 4: ein Ablaufdiagramm der Sendeleistungssteuerung des Organisationskanals, und
- FIG 5: ein vereinfachtes Blockschaltbild einer erfindungsgemäßen Basisstation.

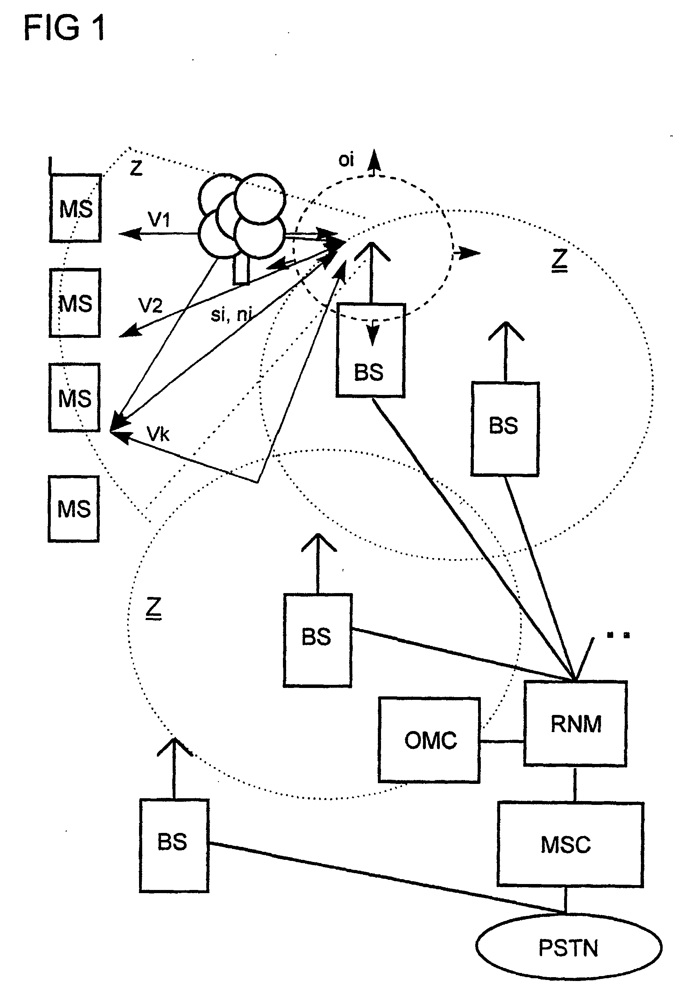

Das in FIG 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Die Einrichtung RNM zum Zuteilen von funktechnischen Ressourcen und mehrere Basisstationen BS bilden ein Basisstationssystem.

An die Einrichtung zum Zuteilen von funktechnischen Ressourcen RNM ist beispielhaft ein Operations- und Wartungszentrum OMC angeschlossen, das Funktionen zur Steuerung und Verwaltung von verschiedensten Einrichtungen des Mobilfunknetzes realisiert. Das Operations- und Wartungszentrum OMC kann auch direkt an die Mobilvermittlungsstelle MSC angeschlossen sein. Eine Ansteuerung einer Basisstation BS erfolgt dahingegen immer über eine Einrichtung zum Zuteilen von funktechnischen Ressourcen RNM bzw. über eine Basisstations-Steuerung.

Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimbasisstationen sind an ein Festnetz angeschlossen.

In FIG 1 sind Verbindungen V, beispielhaft als V1, V2, Vk bezeichnet, zur Übertragung von Nutzinformationen ni und Signalisierungsinformationen si zwischen Mobilstationen MS und einer Basisstation BS dargestellt. Die Übertragung von Organisationsinformationen oi erfolgt an mehrere Mobilstationen MS in Form einer Punkt-zu-Multipunkt-Verbindung.

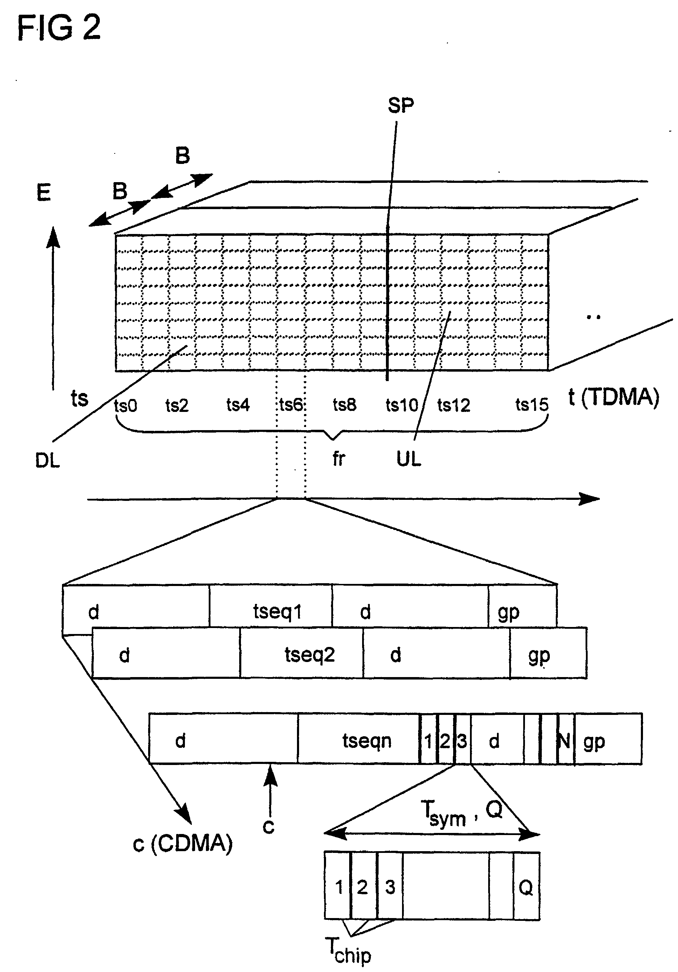

Eine Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 5 MHz in mehrere Zeitschlitze ts gleicher Zeitdauer, beispielsweise 16 Zeitschlitze ts0 bis ts15 vorgesehen. Ein Teil der Zeitschlitze ts0 bis ts9 werden in Abwärtsrichtung DL und ein Teil der Zeitschlitze ts10 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb eines Zeitschlitzes, der zur Übertragung von Informationen oi, si, ni vorgesehen ist, werden Informationen mehrerer Verbindungen in Funkblöcken übertragen. Diese Funkblöcke zur Nutzdatenübertragung bestehen aus Abschnitten mit Daten d, in denen empfangsseitig bekannte Trainingssequenzen tseql bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer Tsym Q Chips der Dauer Tchip übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate | 4096 Mcps |
| Rahmendauer | 10 ms |
| Anzahl Zeitschlitze | 16 |
| Dauer eines Zeitschlitzes | 625 µs |
| Spreizfaktor | 16 |
| Modulationsart | QPSK |
| Bandbreite | 5 MHz |
| Frequenzwiederholungswert | 1 |

Diese Parameter ermöglichen eine bestmögliche Harmonisierung mit einem FDD (frequency division duplex) Modus für die 3. Mobilfunkgeneration. Vorteilhafterweise ist der Umschaltpunkt SP innerhalb einer Gruppe von Zellen gleich gewählt.

In dieser Rahmenstruktur werden beispielsweise im ersten Zeitschlitz ts0 eines Rahmens jeweils Organisationsinformationen oi in einem beispielhaft als Organisationskanal BCCH bezeichneten Funkkanal übertragen. In den übrigen Zeitschlitzen ts1 bis ts15 werden Nutzinfomationen ni in Auf- UL oder Abwärtsrichtung DL übertragen.

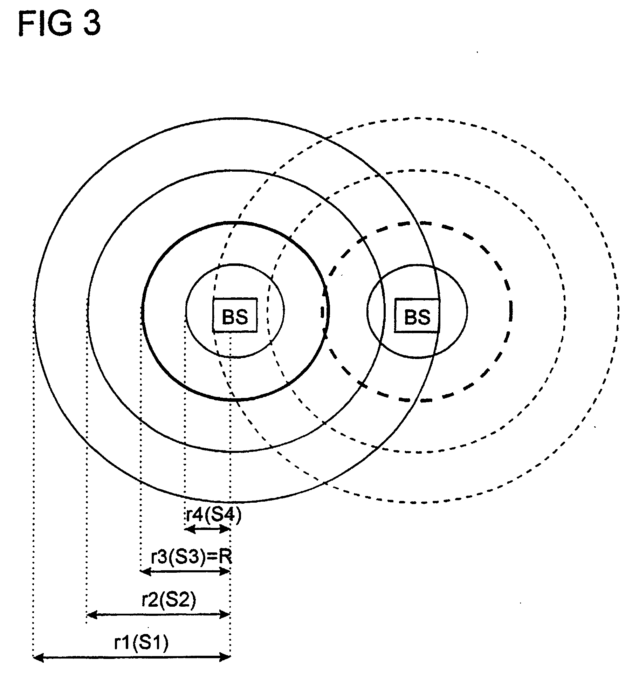

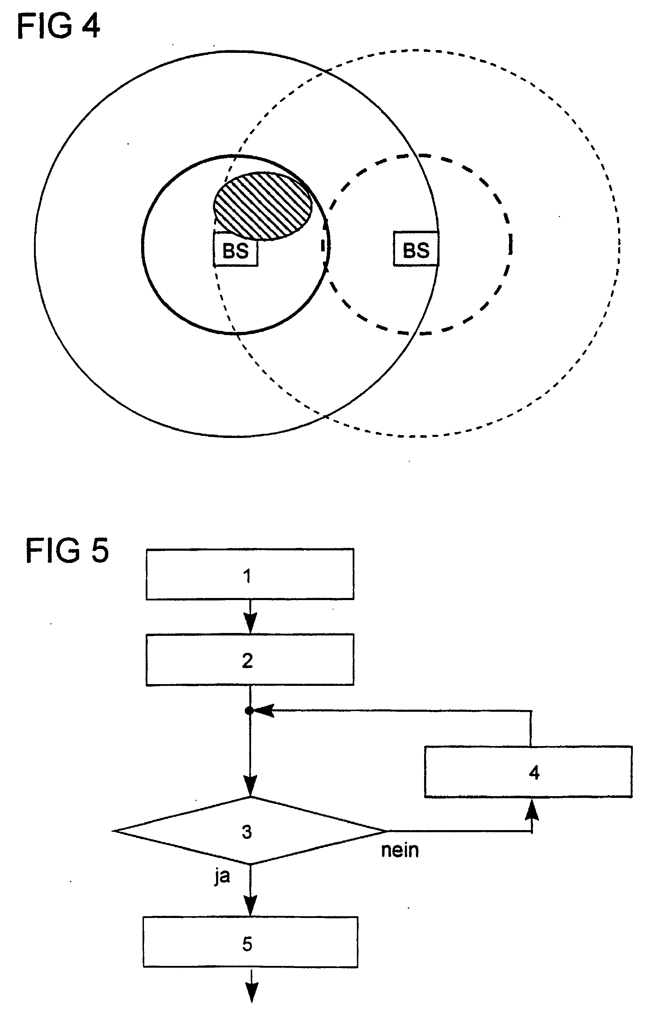

In der FIG 3 ist eine beispielhafte Situation der Reichweiten unterschiedlicher individueller Dienste zweier benachbarter Basisstationen BS des Funk-Kommunikationssystems aufgezeigt. Dabei wird angenommen, daß die linke Basisstation BS vier individuelle Dienste S1 bis S4 zur Verfügung stellt. Für jeden individuellen Dienst S1 bis S4 ergibt sich eine spezifische Reichweite r1 bis r4, wobei r1<r2<r3<r4 ist, welches durch unterschiedliche Anforderungen des jeweiligen Dienstes S1 bis S4 an das Übertragungsmedium begründet ist. Ausgehend von dieser Tatsache wird die Sendeleistung des Organisationskanals BCCH beispielsweise in der Weise angepaßt, daß der Radius R der Funkzelle, die durch den Organisationskanal BCCH definiert wird, der Reichweite r3 beispielsweise des dritten Dienstes S3 entspricht. Hierdurch wird sichergestellt, daß eine Mobilstation MS, die sich innerhalb der Funkzelle Z der Basisstation BS befindet, flächendeckend zumindest auf die Dienste S1 bis S3 zugreifen kann. Der vierte dargestellte Dienst S4 ist dahingegen nicht flächendeckend in der Funkzelle Z verfügbar, wohingegen die Dienste S1 und S2 auch weit außerhalb der Funkzelle Z verfügbar sind. Dieser Vorteil wird in der FIG 4 noch eingehender erläutert. Allgemein kann der Zellradius R jedoch derart bestimmt werden, daß er auf die Reichweite r4 des anspruchsvollsten der flächendeckend zur Verfügung stehenden Dienste, wie beispielsweise den Dienst S4, beschränkt wird.

Für die Bestimmung der Sendeleistung des Organisationskanals BCCH in Abhängigkeit von der Reichweite r3 eines oder mehrerer Dienste, wie beispielsweise S3, werden mehrere Parameter herangezogen. In dem GSM-Mobilfunksystem der zweiten Generation, ist der Radius R der Funkzelle nur von topographischen und morphologischen Eigenschaften des Versorgungsgebietes abhängig, da der Organisationskanal BCCH immer mit der größten Sendeleistung gesendet wird. Erfindungsgemäß werden zusätzlich zu diesen natürlich bedingten Parametern weitere Parameter für die Bestimmung der erforderlichen Sendeleistung des Organisationskanals BCCH herangezogen. Dieses können mehrere statische und dynamische Parameter wie beispielsweise eine maximale Datenrate der Funkschnittstelle, eine zu garantierende Dienstqualität QoS des jeweiligen Dienstes S3 oder auch eine aktuelle Auslastung der Funkschnittstelle sein, wobei die Dienstqualitäten QoS der jeweiligen Dienste S1 bis S4 unterschiedlich sind und beispielsweise von der maximal erlaubten Fehlerrate abhängen können.

Als Folge des Einflusses dieser zusätzlichen Parameter auf die Sendeleistung des Organisationskanals BCCH und somit auf den Radius R der Funkzelle Z kann durchaus der Fall auftreten, daß der Organisationskanal BCCH mit einer geringeren Sendeleistung als ein oder mehrere Dienste S1 bis S4 gesendet wird.

In der FIG 4 ist eine Situation aufgezeigt, wie sie bei einem hohen Verkehrsaufkommen in einem Bereich einer Funkzelle Z auftreten kann. Beispielhaft ist in dem Bereich der Funkzelle Z der linken Basisstation BS ein sehr hohes Verkehrsaufkommen durch eine schraffierte Fläche dargestellt. In dieser Konfiguration kann der Fall auftreten, daß eine Mobilstation, die sich ebenfalls in diesem Bereich des erhöhten Verkehrsaufkommens befindet, keine Verbindung mehr zu der linken Basisstation BS aufbauen kann, da die gesamte Übertragungskapazität der linken Basisstation erschöpft ist. In diesem Fall kann diese weitere Mobilstation beispielsweise eine Verbindung zu der rechten Basisstation BS aufbauen, obwohl sie sich nicht direkt in dessen Funkversorgungsbereich befindet, da, wie in der FIG 4 verdeutlicht ist, durchaus Dienste, die keine hohen Anforderungen an das Übertragungsmedium stellen, in dem Bereich des hohen Verkehrsaufkommens verfügbar sind.

Die Entscheidung, eine Verbindung zu der rechten Basisstation BS aufzubauen, kann der weiteren Mobilstation beispielsweise dadurch erleichtert werden, daß auf dem Organisationskanal BCCH Informationen über die Sendeleistung und über die verwendete Schutzkodierung gesendet werden. Anhand dieser Informationen kann die weitere Mobilstation MS eine Abschätzung der Reichweite einzelner Dienste vornehmen, und bei Bedarf eine Verbindung aufbauen. Die Information über die Sendeleistung kann beispielsweise in Relation zu einem Standardwert, der für das gesamte Funk-Kommunikationssystem, bzw. für eine bestimmte Hierarchieebene des Funk-Kommunikationssystems gilt, angegeben werden, wie beispielsweise in Form der verwendeten Dämpfung in dB und eines Absolutwertes der Sendeleistung. In hierarchischen Funkzellenstrukturen kann zusätzlich zu diesen Informationen eine Information über die Hierarchieebene, die von der jeweiligen Basisstation versorgt wird, enthalten.

Weiterhin kann beispielsweise eine dynamische Anpassung der Reichweiten der jeweiligen Dienste sowohl der linken als auch der rechten Basisstation BS abhängig von der Verkehrsbelastung vorgenommen werden. So ist es denkbar, wenn vor allem Dienste mit niedrigen Anforderungen, wie beispielsweise Sprachdienste, von Teilnehmern angefordert werden, die Reichweite derartiger Dienste durch Erhöhung der Sendeleistung der rechten Basisstation BS für diese Dienste vergrößert wird. In dieser Weise können dynamisch die Reichweiten der einzelnen Dienste verändert und den jeweiligen Anforderungen angepaßt werden. Eine derartige Steuerung der Sendeleistungen kann beispielsweise von der Einrichtung RNM zur Zuteilung funktechnischer Ressourcen bzw. von einem Operations- und Wartungszentrum OMC initiiert werden, wenn in einer dieser Einrichtungen eine Verwaltung der beschriebenen dynamischen und statischen Parameter sowie eine Beobachtung und Auswertung des aktuellen Verkehrsaufkommens erfolgt.

In der FIG 5 ist das Ablaufdiagramm einer Ausführung des erfindungsgemäßen Verfahrens dargestellt. In diesem Beispiel soll der Radius R der Funkzelle Z der linken Basisstation BS der FIG 3 der Reichweite r3 des Dienste S3 angepaßt werden. In dem Feld 1 des Ablaufdiagramms wird die Verkehrsbelastung als ein beispielhafter Parameter, der in die Steuerung der Sendeleistungen sowohl des Organisationskanals BCCH als auch der individuellen Dienste S1 bis S4 einfließen kann, ermittelt. In dem nachfolgenden Feld 2 wird die effektive Reichweite r3 des dem Beispiel zugrundeliegenden Dienstes S3 ermittelt. Diese Reichweite r3 hängt, wie bereits vorangehend beschrieben, von mehreren Parametern wie beispielsweise der maximalen Datenrate der Funkschnittstelle, der erforderlichen Dienstqualität QoS oder der Auslastung der Funkschnittstelle ab. In dem Entscheidungsfeld 4 erfolgt ein Vergleich des Radius R der Funkzelle Z, der durch die Sendeleistung des Organisationskanals BCCH definiert ist, mit der Reichweite r3 des Dienste S3. Entspricht der Radius R nicht der Reichweite r3 des Dienstes S3, so wird gemäß Feld 4 eine Verringerung der Sendeleistung des Organisationskanals BCCH vorgenommen. Entspricht die Radius R der Funkzelle Z der Reichweite r3 des Dienstes S3, so werden gemäß Feld 5 in dem Organisationskanal BCCH Informationen beispielsweise über die Sendeleistung, die verwendete Schutzkodierung und evtl. Der Hierarchieebene gesendet, die von einer empfangenden Mobilstation MS ausgewertet werden können.

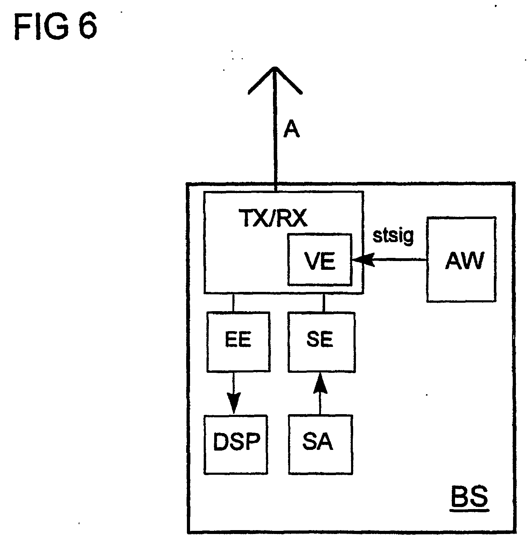

Die FIG 6 zeigt eine Basisstation BS mit mehreren Einrichtungen, die teilweise für die Durchführung des erfindungsgemäßen Verfahrens wesentlich sind, wobei nicht alle in einer realen Basisstation vorhandenen Einrichtungen angegeben sind. Die Informationsübertragung wird in der Basisstation BS durchgeführt, wobei die Administrierung des Umschaltpunktes SP und Angaben für die angebotenen Dienste durch das Operations- und Wartungszentrum OMC beeinflußt und die Vorgaben der Einrichtung RNM zur Zuteilung funktechnischer Ressourcen beachtet werden. Die Basisstation BS enthält eine Sende/Empfangseinrichtung TX/RX zur hochfrequenten Verarbeitung von Sende- und Empfangssignalen und eine Antenneneinrichtung A zum Senden und Empfangen von Signalen auf der Funkschnittstelle.

Weiterhin sind eine Sendeeinrichtung SE und einem Empfangseinrichtung EE mit der Sende/Empfangseinrichtung TX/RX verbunden. In der Sendeeinrichtung SE werden die Signale digital/analog gewandelt, vom Basisband in den Frequenzbereich der Abstrahlung umsetzt und die Sendesignale moduliert und verstärkt. Eine Signalaufbereitungseinrichtung SA hat zuvor die zu übertragenden Informationen oi, si, ni in Funkblöcken zusammengestellt und dem entsprechenden Frequenzband und Zeitschlitz zugeordnet. Eine Signalverarbeitungseinrichtung DSP wertet über die Empfangseinrichtung EE korrespondierend zur Sendeeinrichtung SE verarbeiteten Signale aus und führt eine Kanalschätzung und eine Datendetektion durch.

In einer Auswerteeinrichtung AW in der Basisstation BS werden die jeweiligen Reichweiten r1 bis r4 der einzelnen individuellen Dienste S1 bis S4 bestimmt, wobei zur Erläuterung der Funktionsweise von der beispielhaft angegebenen Konfiguration der FIG 3 ausgegangen wird. In der Auswerteeinrichtung AW werden demnach die Reichweiten r1 bis r4 durch eine Auswertung unterschiedlicher Parameter, die vorangehend bereits ausführlich beschrieben wurde, ermittelt. Die der Auswertung zugrundeliegenden Parameter können dabei beispielsweise von der Einrichtung RNM zur Zuteilung funktechnischer Ressourcen oder von dem Operations- und Wartungszentrum OMC des Funk-Kommunikationssystems zur Verfügung gestellt werden. In einer dieser Einrichtungen kann auch bestimmt werden, welche individuellen Dienste S1 bis S3 flächendeckend in der Funkzelle Z zur Verfügung gestellt werden sollen. In dem Beispiel der FIG 3 sind dieses die Dienste S1 bis S3. In der Auswerteeinrichtung AW wird auf der Grundlage der Reichweite r3 des Dienstes S3, der die höchsten Anforderungen dieser Gruppe individueller Dienste an das Übertragungsmedium stellt, ein Steuersignal stsig abgeleitet, das der Ansteuerung einer regelbaren Verstärkungseinrichtung VE in der Sende-/Empfangseinrichtung TX/RX dient. Durch diese Beeinflussung der Sendeleistung, mit der der Organisationskanal BCCH gesendet wird, wird der Radius R der Funkzelle Z verändert und der Reichweite r3 des Dienstes S3 angeglichen.

In gleicher Weise wie die Veränderung der Sendeleistung des Organisationskanals BCCH können auch die Sendeleistungen für die jeweiligen individuellen Dienste S1 bis S4 verändert werden, wenn wie im Beispiel der FIG 4 einer weiteren Mobilstation MS die Möglichkeit eines Verbindungsaufbaus zu einer benachbarten Basisstation BS gegeben werden soll.

In dem Organisationskanal BCCH werden Informationen bezüglich der Sendeleistung, der Schutzkodierung des Organisationskanals BCCH und evtl. der Hierarchieebene gesendet, die von einer empfangenden Mobilstation MS ausgewertet werden können.

Weiterhin ist alternativ zu dem Beispiel der FIG 6 denkbar, daß die Auswerteeinrichtung AW zentral in einer Einrichtung RNM zur Zuteilung funktechnischer Ressourcen verwirklicht ist und Steuersignale stsig zur Sendeleistungsregelung der Organisationskanäle BCCH direkt zu den einzelnen angeschlossenen Basisstationen BS überträgt. Hierdurch ist eine harmonische Veränderung der Funkzellenstruktur sichergestellt, wenn die Sendeleistung des Organisationskanals einer Basisstation BS verringert wird, da diese Verringerung er Funkzelle Z durch benachbarte Funkzellen Z ausgeglichen werden muß, und es kann dynamisch auf Veränderungen der einzelnen Parameter reagiert werden.

Eine andere Ausführungsform kann ebenso darauf beruhen, daß sämtliche auf die Reichweite r1 bis r4 bestimmter individueller Dienste S1 bis S4 einflußnehmende Parameter in dem zentralen Operations- und Wartungszentrum OMC verwaltet werden. Hierdurch ist eine zentrale Funknetzplanung für ein großes Gebiet und einer Vielzahl Basisstationen BS sichergestellt.

## Patentansprüche

1. Verfahren zur Steuerung einer Funkzellengröße in einem Funk-Kommunikationssystem, wobei der Radius (R) der von jeweils einer Basisstation (BS) des Funk-Kommunikationssystems mit funktechnischen Ressourcen versorgten Funkzelle (Z) durch eine Sendeleistung eines Organisationskanals (BCCH) definiert ist, und wobei von dem Funk-Komnunikationssystem zur Verfügung gestellte individuelle Dienste (S1...) eine jeweils unterschiedliche Reichweite (r1...) aufweisen, **dadurch gekennzeichnet, daß**
die Sendeleistung des Organisationskanals (BCCH) abhängig von der Reichweite (r1...) eines oder mehrerer Dienste (S1...) gesteuert wird.

2. Verfahren nach Anspruch 1, bei dem
in dem Organisationskanal (BCCH) Informationen über die Sendeleistung und/oder eine Schutzkodierung des Organisationskanals (BCCH) von der Basisstation (BS) gesendet werden.

3. Verfahren nach Anspruch 2, bei dem
die Informationen auf für das Funk-Kommunikationssystem geltenden einheitlichen Referenzwerten bezogen angegeben werden.

4. Verfahren nach Anspruch 2, bei dem
das Funk-Kommunikationssystem gemäß einer hierarchischen Funkzellenstruktur aufgebaut ist, und die Informationen auf für die jeweilige Hierarchieebene geltenden einheitlichen Referenzwerten bezogen angegeben werden.

5. Verfahren nach einem der vorhergehenden Ansprüche, bei dem ein oder mehrere individuelle Dienste (S1...) mit einer höheren Sendeleistung als der Organisationskanal (BCCH) gesendet werden.

6. Verfahren nach einem der vorhergehenden Ansprüche, bei dem die Sendeleistung des Organisationskanals (BCCH) derart gesteuert wird, daß der Radius (R) der Funkzelle (Z) einer Reichweite (r3) eines individuellen Dienstes (S3) entspricht, der innerhalb der Funkzelle (Z) genutzt werden soll.

7. Verfahren nach einem der vorhergehenden Ansprüche, bei dem die Sendeleistung des Organisationskanals (BCCH) und/oder eines oder mehrerer individueller Dienste (S1...) abhängig von einer Verkehrsbelastung in der Funkzelle (Z) einer benachbarten Basisstation gesteuert wird.

8. Verfahren nach einem der vorhergehenden Ansprüche, bei dem für die Bestimmung der Reichweiten (r1...) eines oder mehrerer individueller Dienste (S1...) eine maximale Datenrate der Funkschnittstelle berücksichtigt wird.

9. Verfahren nach einem der vorhergehenden Ansprüche, bei dem für die Bestimmung der Reichweite (r1...) eines oder mehrerer individueller Dienste (S1...) eine zu garantierende Dienstqualität (QoS) des Dienstes (S1...) berücksichtigt wird.

10. Verfahren nach einem der vorhergehenden Ansprüche, bei dem
für die Bestimmung der Reichweite (r1...) eines oder mehrerer individueller Dienste (S1...) eine aktuelle Auslastung der Funkschnittstelle berücksichtigt wird.

11. Verfahren nach einem der vorhergehenden Ansprüche, bei dem
die individuellen Dienste (S1...) als Sprachdienste, Notrufdienste, Kurznachrichtendienste, Teletextdienste, Faksimiledienste, Internetdienst oder Bildübertragungsdienste ausgebildet sind.

12. Verfahren nach einem der vorhergehenden Ansprüche, bei dem die Funkschnittstelle nach einem TDD-Übertragungsverfahren mit breitbandigen Kanälen organisiert ist.

13. Basisstation (BS) eines Funk-Kommunikationssystems, die eine Funkzelle (Z) mit funktechnischen Ressourcen versorgt, wobei der Radius (R) der Funkzelle (Z) durch eine Sendeleistung eines Organisationskanals (BCCH) definiert ist, und die eine Verstärkungseinrichtung (VE) zum Verändern der Verstärkung des Organisationskanals (BCCH) sowie eine Sendeeinrichtung (SE) zum Senden des Organisationskanals (BCCH) und von individuellen Diensten (S1...) aufweist,
**gekennzeichnet durch**
eine Auswerteeinrichtung (AM) zum Bestimmen von Reichweiten (r1...) der individuellen Dienste (S1...) und zum Ableiten eines Steuersignals (stsig) zur Steuerung der Sendeleistung des Organisationskanals (BCCH) abhängig von der Reichweite (r1...) eines oder mehrerer Dienste (S1...), wobei das Steuersignal (stsig) die Verstärkungseinrichtung (VE) ansteuert.

14. Basisstation nach Anspruch 13, bei dem
die Sendeeinrichtung (SE) in dem Organisationskanal (BCCH) Informationen bezüglich der Sendeleistung und/oder einer Schutzkodierung des Organisationskanals (BCCH) sendet.

15. Basisstation nach Anspruch 13 oder 14, bei der
die Verstärkungseinrichtung (VE) zusätzlich die Sendeleistung eines oder mehrerer individueller Dienste (S1...) verändert.

16. Basisstation nach einem der Ansprüche 13 bis 15, bei der die Verstärkungseinrichtung (VE) die Sendeleistung des Organisationskanals (BCCH) und/oder eines oder mehrerer individueller Dienste (S1...) abhängig von einer Verkehrsbelastung in der Funkzelle einer benachbarten Basisstation verändert.

17. Basisstation nach einem der Ansprüche 13 bis 16, bei der die Auswerteeinrichtung (AW) die Reichweite (r3) eines individuellen Dienstes (S3) aus einer maximalen Datenrate der Funkschnittstelle und/oder aus einer zu garantierenden Dienstqualität (QoS) des individuellen Dienstes (S3) und/oder aus einer aktuellen Auslastung der Funkschnittstelle bestimmt.

18. Basisstation (BS) nach Anspruch 17, bei der
die Auswerteeinrichtung (AW) die Informationen zur Bestimmung der Reichweite (r3) des individuellen Dienstes (S3) von einem Operations- und Wartungszentrum (OMC) des Funk-Kommunikationssystems erhält.

## Claims

1. Method for controlling a radio cell size in a radio communications system, with the radius (R) of the radio cell (Z) which is supplied with radio resources by in each case one base station (BS) in the radio communications system being defined by a transmission power in an organization channel (BCCH), and with individual services (S1 ...) which are made available by the radio communications system each having a different range (r1 ...),
**characterized in that**
the transmission power of the organization channel (BCCH) is controlled as a function of the range (r1 ... of one or more services (S1 ...).

2. Method according to Claim 1, in which
information about the transmission power and/or protective coding of the organization channel (BCCH) is transmitted by the base station (BS) in the organization channel (BCCH).

3. Method according to Claim 2, in which
the information is quoted with respect to the standard reference values applicable to the radio communications system.

4. Method according to Claim 2, in which
the radio communications system is set up on the basis of a hierarchical radio cell structure, and the information is stated with respect to the standard reference values for the respective hierarchy level.

5. Method according to one of the preceding claims, in which
one or more individual services (S1 ...) are transmitted at a higher transmission power than the organization channel (BCCH).

6. Method according to one of the preceding claims, in which
the transmission power of the organization channel (BCCH) is controlled such that the radius (R) of the radio cell (Z) corresponds to a range (r3) of an individual service (S3) which is intended to be used within that radio cell (Z).

7. Method according to one of the preceding claims, in which
the transmission power of the organization channel (BCCH) and/or of one or more individual services (S1 ...) is controlled as a function of a traffic load in the radio cell (Z) of an adjacent base station.

8. Method according to one of the preceding claims, in which
a maximum data rate of the radio interface is taken into account for determining the ranges (r1 ...) of one or more individual services (S1 ...).

9. Method according to one of the preceding claims, in which
a quality of service (QoS) which is to be guaranteed for the service (S1 ...) is taken into account for determining the range (r1 ...) of one or more individual services (S1 ...).

10. Method according to one of the preceding claims, in which
a present load level on the radio interface is taken into account when determining the range (r1 ...) of one or more individual services (S1 ...).

11. Method according to one of the preceding claims, in which
the individual services (S1 ...) are in the form of speech services, emergency services, short message services, teletext services, facsimile services, and Internet service or picture transmission services.

12. Method according to one of the preceding claims, in which
the radio interface is organized on the basis of a TDD transmission method with broadband channels.

13. Base station (BS) for a radio communications system, which supplies radio resources for a radio cell (Z), with the radius (R) of the radio cell (Z) being defined by a transmission power of an organization channel (BCCH), and which has an amplification device (VE) for varying the gain in the organization channel (BCCH) as well as a transmission device (SE) for transmission of the organization channel (BCCH) and of individual services (S1 ...),
**characterized by**
an evaluation device (AW) for determining ranges (r1 ...) of the individual services (S1 ...) and for deriving a control signal (stsig) for controlling the transmission power of the organization channel (BCCH) as a function of the range (r1 ...) of one or more services (S1 ...), with the control signal (stsig) driving the amplification device (VE).

14. Base station according to Claim 13, in which
the transmission device (SE) transmits information in the organization channel (BCCH) with respect to the transmission power and/or with respect to a protective coding for the organization channel (BCCH).

15. Base station according to Claim 13 or 14, in which the amplification device (VE) additionally varies the transmission power of one or more individual services (S1 ...).

16. Base station according to one of Claims 13 to 15, in which
the amplification device (VE) varies the transmission power of the organization channel (BCCH) and/or of one or more individual services (S1 ...) as a function of a traffic load in the radio cell of an adjacent base station.

17. Base station according to one of Claims 13 to 16, in which
the evaluation device (AW) determines the range (r3) of an individual service (S3) from a maximum data rate of the radio interface and/or from a quality of service (QoS) which is to be guaranteed for the individual service (S3), and/or from a present load level on the radio interface.

18. Base station (BS)' according to Claim 17, in which the evaluation device (AW) receives the information for determining the range (r3) of the individual service (S3) from an operation and maintenance centre (OMC) in the radio communications system.

## Revendications

1. Procédé de régularisation de la grandeur d'une cellule radio dans un système de communication radio, le rayon (R) de la cellule radio (Z) alimentée en ressources radio par une station de base (BS) du système de communication radio dans chaque cas étant défini par une puissance d'émission d'un canal d'organisation (BCCH) et les services individuels (S1 ...) mis à disposition par ledit système de communication radio ayant chacun une portée différente (r1 ...),
**caractérisé en ce que**
la puissance d'émission du canal d'organisation (BCCH) est réglée en fonction de la portée (r1 ...) d'un ou de plusieurs services (S1 ...).

2. Procédé selon la revendication 1, dans lequel
la station de base (BS) émet, dans le canal d'organisation (BCCH), des informations relatives à la puissance d'émission et/ou à un codage de protection dudit canal d'organisation (BCCH).

3. Procédé selon la revendication 2, dans lequel
les informations données se réfèrent à des valeurs de référence standards valables dans le système de communication radio.

4. Procédé selon la revendication 2, dans lequel
le système de communication radio est configuré selon une structure hiérarchique de cellules radio et dans lequel les informations données se réfèrent à des valeurs de référence standards valables pour chaque niveau hiérarchique.

5. Procédé selon l'une des revendications précédentes, dans lequel l'émission d'un ou de plusieurs services individuels (S1 ...) s'effectue avec une puissance d'émission supérieure à celle du canal d'organisation (BCCH).

6. Procédé selon l'une des revendications précédentes, dans lequel la puissance d'émission du canal d'organisation (BCCH) est réglée de manière que le rayon (R) de la cellule radio (Z) corresponde à la portée (r3) d'un service individuel (S3) devant pouvoir être utilisé à l'intérieur de la cellule radio (Z).

7. Procédé selon l'une des revendications précédentes, dans lequel la puissance d'émission du canal d'organisation (BCCH) et/ou d'un ou de plusieurs services individuels (S1 ...) est réglée en fonction d'une charge de trafic dans la cellule radio (Z) d'une station de base voisine.

8. Procédé selon l'une des revendications précédentes, dans lequel les portées (r1 ...) d'un ou de plusieurs services individuels (S1 ...) sont déterminées compte tenu d'un taux maximum de données de l'interface radio.

9. Procédé selon l'une des revendications précédentes, dans lequel la portée (r1 ...) d'un ou de plusieurs services individuels (S1 ...) est déterminée compte tenu d'une qualité de service (QoS) à garantir pour le service (S1 ...).

10. Procédé selon l'une des revendications précédentes, dans lequel la portée (r1 ...) d'un ou de plusieurs services individuels (S1 ...) est déterminée compte tenu d'une utilisation actuelle des capacités de l'interface radio.

11. Procédé selon l'une des revendications précédentes, dans lequel les services individuels (S1 ...) sont des services vocaux, des services d'appel d'urgence, des services d'informations brèves, des services de télétexte, des services facsimile, des services Internet ou des services de transmission d'images.

12. Procédé selon l'une des revendications précédentes, dans lequel l'interface radio est configuré selon un procédé de transmission TDD, avec des canaux à large bande.

13. Station de base (BS) d'un système de communication radio alimentant une cellule radio (Z) en ressources radio, le rayon (R) de la cellule radio (Z) étant défini par une puissance d'émission d'un canal d'organisation (BCCH), et comprenant un dispositif d'amplification (VE) servant à modifier le gain de transmission du canal d'organisation (BCCH) ainsi qu'un dispositif émetteur (SE) pour l'émission du canal d'organisation (BCCH) et de services individuels (S1 ...),
**caractérisée par**
un dispositif d'analyse (AW) pour déterminer des portées (r1 ...) des services individuels (S1 ...) et pour dériver un signal de réglage (stsig) pour le réglage de la puissance d'émission du canal d'organisation (BCCH) en fonction de la portée (r1 ...) d'un ou de plusieurs services (S1 ...), le signal de réglage (stsig) venant exciter le dispositif d'amplification (VE).

14. Station de base selon la revendication 13, dans laquelle
le dispositif émetteur (SE) émet, dans le canal d'organisation (BCCH), des informations relatives à la puissance d'émission et/ou à un codage de protection dudit canal d'organisation (BCCH).

15. Station de base selon la revendication 13 ou 14, dans laquelle
le dispositif d'amplification (VE) modifie additionnellement la puissance d'émission d'un ou de plusieurs services individuels (S1 ...).

16. Station de base selon l'une des revendications 13 à 15, dans laquelle
le dispositif d'amplification (VE) modifie la puissance d'émission du canal d'organisation (BCCH) et / ou d'un ou de plusieurs services individuels (S1 ...) en fonction d'une charge de trafic dans la cellule radio d'une station de base voisine.

17. Station de base selon l'une des revendications 13 à 16, dans laquelle
le dispositif d'analyse (AW) détermine la portée (r3) d'un service individuel (S3) sur base d'un taux maximum de données de l'interface radio et / ou sur base d'une qualité de service à garantir (QoS) pour le service individuel (S3) et / ou sur base d'une utilisation actuelle des capacités de l'interface radio.

18. Station de base (BS) selon la revendication 17, dans laquelle
le dispositif d'analyse (AW) reçoit d'un centre d'exploitation et de maintenance (OMC) du système de communication radio les informations servant à déterminer la portée (r3) du service individuel (S3).
